# DEMANDE DE BREVET EUROPEEN

(11) **EP 2 626 837 A1**
(43) Date de publication de la demande: **14.08.2013**
(21) Numéro de dépôt: 13152779.8
(22) Date de dépôt: 25.01.2013
(51) Int. Cl.: G06T 15/04

(54) **Système de création de représentations tridimensionnelles à partir de modèles réels ayant des caractéristiques similaires et prédéterminées**

(30) Priorité: 13.02.2012 FR 1251338
(71) Demandeur: Total Immersion, 92150 Suresnes (FR)
(72) Inventeur: Rollet, Renan, 93170 BAGNOLET (FR)
(74) Mandataire: Imbert de Tremiolles, Ghislain

(57) **Abrégé**

L'invention a notamment pour objet la création de représentations tridimensionnelles à partir de modèles réels ayant des caractéristiques similaires et prédéterminés à l'aide d'un système comprenant un support adapté à recevoir un tel objet réel, configuré pour présenter l'objet dans une pose similaire à celle d'utilisation dudit au moins un objet réel, un dispositif d'acquisition d'images configuré pour obtenir au moins deux images distinctes de l'objet réel selon au moins deux points de vue distincts et un dispositif de traitement de données configuré pour recevoir ces images, détourer une représentation de l'objet réel dans chacune de ces images pour obtenir au moins deux textures de l'objet réel, obtenir un modèle tridimensionnel générique de l'objet réel et créer un modèle tridimensionnel de l'objet réel à partir des textures et du modèle tridimensionnel générique obtenu.

## Description

La présente invention concerne la modélisation d'objets réels et plus particulièrement un système de création de représentations tridimensionnelles à partir de modèles réels ayant des caractéristiques similaires et prédéterminées.

Les représentations tridimensionnelles d'objets réels sont souvent utilisées dans des systèmes informatiques pour de nombreuses applications telles que l'aide à la conception ou la simulation. Ainsi, par exemple, les représentations tridimensionnelles de paires de lunettes peuvent être utilisées par des acheteurs potentiels, dans une application de réalité augmentée, pour les aider à choisir une paire de lunettes particulière selon, notamment, sa forme et sa couleur.

Les représentations tridimensionnelles sont des entités informatiques comprenant typiquement un ensemble de points et/ou de courbes représentant des surfaces auxquelles peuvent être associées des textures.

De telles représentations tridimensionnelles sont généralement générées à partir d'applications logicielles de conception, appelées applications de CAO (sigle de Conception Assistée par Ordinateur).

Elles peuvent également être créées à partir des objets réels, par exemple par numérisation à l'aide d'un scanner qui analyse ces objets pour obtenir des informations topologiques et, le cas échéant, des informations d'apparence telles que les couleurs et les textures. Typiquement, un scanner détermine la position d'un échantillonnage de points, dans un système de coordonnées prédéterminé, des surfaces de l'objet à modéliser pour ensuite extrapoler leur forme.

Des photographies des objets peuvent également être utilisées pour les modéliser par analyse d'images.

Cependant, alors que les solutions existantes permettent d'obtenir de bonnes représentations tridimensionnelles, elles sont généralement complexes à mettre en oeuvre et/ou ont des coûts prohibitifs. Il existe donc un besoin pour les améliorer.

L'invention a ainsi pour objet un système de modélisation d'une pluralité d'objets réels ayant des caractéristiques similaires et prédéterminées, ce système comprenant les dispositifs suivants,
- un support adapté à recevoir au moins un objet réel de ladite pluralité d'objets réels ayant des caractéristiques similaires et prédéterminées, ledit support étant configuré pour présenter l'objet dans une pose similaire à celle d'utilisation dudit au moins un objet réel ;
- au moins un dispositif d'acquisition d'images configuré pour obtenir au moins deux images distinctes dudit au moins un objet réel selon au moins deux points de vue distincts ;
- un dispositif de traitement de données configuré pour mettre en oeuvre les étapes suivantes,
   ○ réception desdites au moins deux images distinctes dudit au moins un objet réel ;
   ○ détourage d'une représentation dudit au moins un objet réel dans chacune desdites au moins deux images pour obtenir au moins deux textures dudit au moins un objet réel ;
   ○ obtention d'un modèle tridimensionnel générique dudit au moins un objet réel ; et
   ○ création d'un modèle tridimensionnel dudit au moins un objet réel à partir desdites au moins deux textures et dudit modèle tridimensionnel générique obtenu.

Le système selon l'invention permet ainsi de faciliter la création de représentations tridimensionnelles d'objets réels ayant des caractéristiques communes et prédéterminées et réduire les coûts de création de ces représentations tridimensionnelles.

Selon un mode de réalisation particulier, le dispositif d'acquisition d'images comprend au moins un premier et un second capteurs d'images, lesdits au moins un premier et un second capteurs d'images étant utilisés pour obtenir chacune desdites au moins deux images, respectivement. Lesdits au moins un premier et un second capteurs d'images sont, de préférence, situés à des positions fixes et prédéterminées par rapport audit support.

Le système selon l'invention peut ainsi être pré-calibré et donc permettre la création de représentations tridimensionnelles d'objets réels ayant des caractéristiques communes et prédéterminées par des personnes n'ayant pas de connaissances particulières dans la modélisation ni dans le domaine des objets réels visés.

Selon un mode de réalisation particulier, ledit support a une couleur uniforme adaptée à un traitement d'images de type *chromakey.*

Toujours selon un mode de réalisation particulier, ledit support comprend au moins une protubérance formant un point d'appui pour ledit au moins un objet réel et/ou au moins deux ouvertures formant deux points d'appui pour ledit au moins un objet réel. Le support permet ainsi un positionnement rapide et précis des objets réels dont une représentation tridimensionnelle doit être obtenue, facilitant ainsi la création de cette dernière.

Toujours selon un mode de réalisation particulier, ledit dispositif de traitement de données est en outre configuré pour identifier un modèle tridimensionnel générique parmi une pluralité de modèles tridimensionnels génériques, ledit modèle tridimensionnel générique obtenu étant ledit modèle tridimensionnel générique identifié, afin d'améliorer la qualité de ladite représentation tridimensionnelle créée.

Ledit dispositif de traitement de données peut en outre être configuré pour retoucher au moins une desdites au moins deux textures dudit au moins un objet réel afin d'améliorer la qualité de ladite représentation tridimensionnelle créée.

Selon un mode de réalisation particulier, ledit dispositif de traitement de données est en outre configuré pour transmettre une commande audit au moins un dispositif d'acquisition d'images, lesdites au moins deux images distinctes dudit au moins un objet réel étant obtenues en réponse à ladite commande, afin d'automatiser le processus de création de représentations tridimensionnelles. Ladite commande peut comprendre un paramètre de configuration dudit au moins un dispositif d'acquisition d'images afin d'améliorer le contrôle de ce dernier.

D'autres avantages, buts et caractéristiques de la présente invention ressortent de la description détaillée qui suit, faite à titre d'exemple non limitatif, au regard des dessins annexés dans lesquels :
- la figure 1 illustre un exemple d'un environnement permettant de mettre en oeuvre l'invention pour modéliser des objets réels ayant des caractéristiques communes et prédéterminées ;
- la figure 2, comprenant les figures 2a à 2f, illustre la façon dont est positionné un objet réel à modéliser, ici une paire de lunettes, sur un support utilisé à ces fins et en situation d'utilisation courante c'est-à-dire ici sur un visage, vu de dessus, de face et de côté ;
- la figure 3 illustre schématiquement certaines étapes mises en oeuvre conformément à l'invention pour modéliser un objet réel ; et
- la figure 4 illustre un exemple de dispositif de traitement d'informations adapté à mettre en oeuvre l'invention ou une partie de l'invention.

De façon générale, l'invention a pour objet d'automatiser la génération de représentations tridimensionnelles d'objets réels ayant des caractéristiques communes et prédéterminées tels que des paires de lunettes. A ces fins, l'invention met en oeuvre un support physique des objets réels à modéliser, un ou plusieurs dispositifs d'acquisition d'images tels que des appareils photographiques et des caméras vidéo et un dispositif de traitement de données de type ordinateur personnel ou station de travail.

Le support physique utilisé pour soutenir l'objet réel à modéliser durant la modélisation est adapté à soutenir l'objet réel dans des conditions proches des conditions d'utilisation de cet objet. En particulier, le support physique permet de maintenir l'objet dans la position dans laquelle il est utilisé, en masquant les zones potentiellement masquées lors de son utilisation. En outre, le support est agencé de telle façon par rapport aux dispositifs d'acquisition d'image qu'il permet l'utilisation d'un référentiel unique et normalisé pour modéliser plusieurs objets similaires.

Le support est avantageusement réalisé dans un matériau ayant une couleur uniforme et réfléchissant la lumière de façon uniforme afin de faciliter le traitement d'image, notamment des opérations d'extraction de zones d'images telles que les opérations connues sous le nom de *chromakey.*

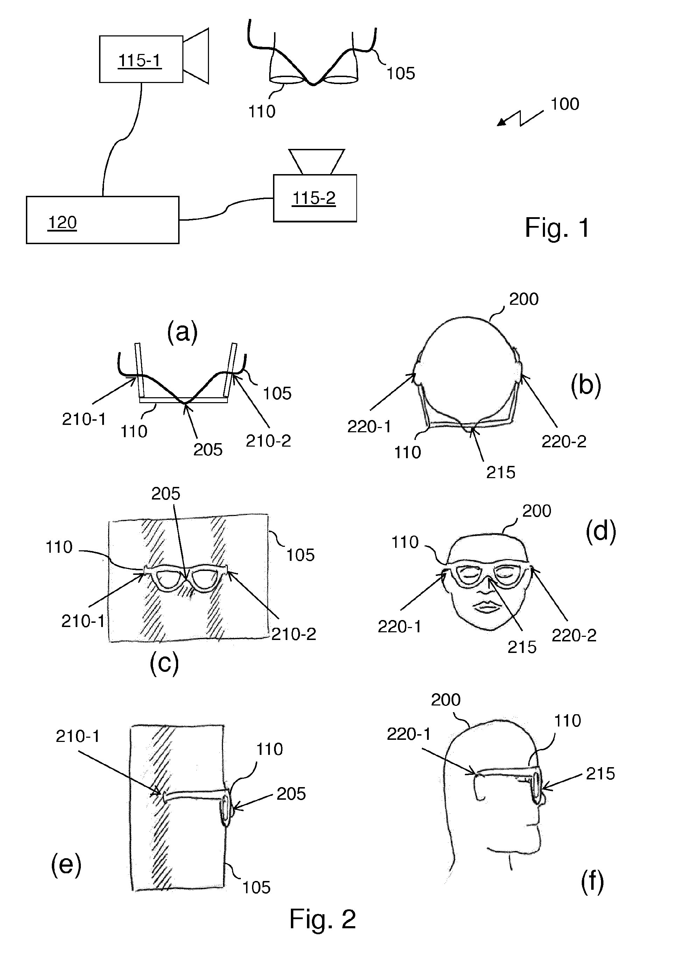

Il consiste typiquement en une surface fermée, par exemple une surface ayant une forme sphérique ou ovoïde, ou ouverte, par exemple une surface générée par le développement d'une courbe telle qu'une courbe plane ayant une forme d'accolade selon une direction particulière, c'est-à-dire en étendant la courbe selon cette direction, et comme illustré sur les figures 1 et 2.

Selon un mode de réalisation particulier, le support est réalisé dans un matériau translucide et comprend une source de lumière située à l'intérieure. Ce mode de réalisation permet de faciliter l'extraction de la représentation de l'objet réel représenté dans une image selon une technique de contrejour permettant notamment l'extraction de textures de l'objet.

Après qu'un objet à modéliser ait été placé sur le support, des images de cet objet sont obtenues, par exemple une image de face et une image de côté de l'image. Ces images peuvent être obtenues à partir de plusieurs dispositifs fixes d'acquisition d'images et/ou de dispositifs mobiles d'acquisition d'images. Ces dispositifs sont connectés à un dispositif de traitement de données de type ordinateur personnel, permettant de traiter et analyser des images obtenues.

La figure 1 illustre un exemple d'un environnement 100 permettant de mettre en oeuvre l'invention pour modéliser des objets réels ayant des caractéristiques communes et prédéterminées.

L'environnement 100 comprend notamment un support 105 configuré pour recevoir au moins un des objets à modéliser, selon une position particulière, ici des paires de lunettes telles que la paire de lunettes 110. Selon l'exemple donné, l'environnement 100 comprend en outre deux dispositifs d'acquisition d'images 115-1 et 115-2, par exemple des appareils photographiques, reliés à un ordinateur 120, par exemple un ordinateur standard de type PC (sigle de *Personal Computer* en terminologie anglo-saxonne).

Le dispositif d'acquisition d'images 115-1 et 115-2 sont ici disposés par rapport au support 105 de telle façon que le dispositif d'acquisition d'images 115-1 soit de côté par rapport à une paire de lunettes à modéliser correctement placée sur le support 105 et que le dispositif d'acquisition d'images 115-2 soit face à cette paire de lunettes.

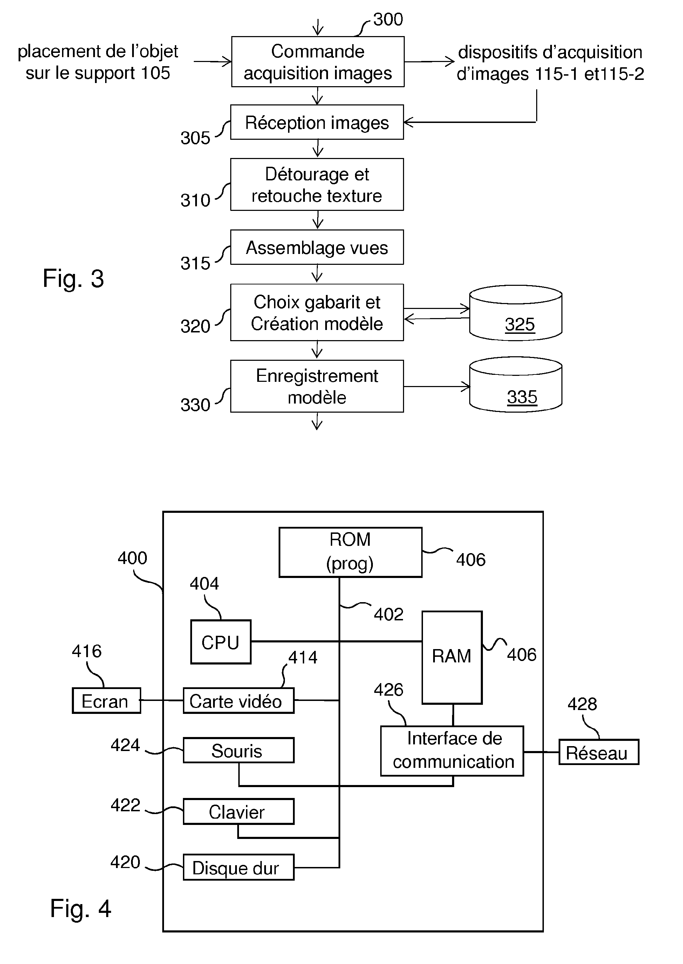

L'ordinateur 120 modélise la paire de lunettes 110 à partir des images acquises par les deux dispositifs d'acquisition d'images 115-1 et 115-2 comme décrit en référence à la figure 3.

Il est observé que plus de deux dispositifs d'acquisition d'images peuvent être utilisés ou que, alternativement, un seul dispositif d'acquisition d'images peut être utilisé, en étant déplacé, pour l'acquisition de plusieurs images de l'objet à modéliser.

Le support 105 est par exemple réalisé dans une matière plastique telle que du PVC (polychlorure de vinyle). Comme illustré schématiquement sur les figures 1 et 2, le support 105 comprend deux ouvertures pour recevoir les extrémités des branches de lunettes et une protubérance adaptée à recevoir les deux supports de nez fixés sur la partie de la monture située entre les verres. Les deux ouvertures et la protubérance sont approximativement alignées selon un plan horizontal.

Les deux dispositifs d'acquisition d'images 115-1 et 115-2 sont situés à des positions prédéterminées par rapport au support 105 de telle sorte que la pose de la paire de lunettes 110, lorsqu'elle est positionnée sur le support 105, soit constante et puisse être prédéterminée. En d'autres termes, le placement d'une paire de lunettes 110 sur le support 105 est ainsi normalisé du fait que le support possède trois points d'appui de référence correspondant aux trois points d'appui naturel d'une paire de lunettes portée ( les oreilles et le nez). Un référentiel unique et normalisé, lié à ces trois points d'appui de référence, est donc utilisé pour modéliser toutes les paires de lunettes. Ce référentiel est avantageusement lié à un point d'appui de référence, par exemple le point d'appui des deux supports de nez fixés sur la partie de la monture située entre les verres, de telle sorte qu'il puisse être utilisé facilement pour la modélisation, pour effectuer le lien entre le support utilisé et une paire de lunettes comme pour la positionnement d'une modélisation d'une paire de lunettes sur une représentation d'un visage.

Lorsqu'un seul dispositif d'acquisition d'images est utilisé, en étant déplacé, il est déplacé selon des positions particulières prédéterminées.

Le support 105 est ici tel qu'il permet, sur une prise de vue de coté, de cacher l'arrière de la branche opposée, de cacher la partie des branches cachées par les oreilles lorsque la paire de lunettes est portée et d'écarter les branches de façon à ne plus voir celle-ci dans une vue de face.

La figure 2, comprenant les figures 2a à 2f, illustre la façon dont est positionné l'objet réel à modéliser, ici une paire de lunettes, sur un support utilisé à ces fins et en situation d'utilisation courante, c'est-à-dire ici sur un visage, vu de dessus, de face et de côté.

Les figures 2a et 2b représentent, vu de dessus, la façon dont est positionnée une paire de lunettes 110 sur un support 105 et sur un visage 200, respectivement. Comme représenté, la paire de lunettes 110 repose sur trois points d'appui du support 105, un point d'appui 205 lié à une protubérance du support 105, ayant un rôle similaire à celui d'un nez pour le maintien de la paire de lunettes 110 sur un point d'appui référencé 215, et deux points d'appui 210-1 et 210-2, liés à des ouvertures formées dans le support 105, dans lesquelles sont insérées les extrémités des branches de la paire de lunettes 110 ayant un rôle similaire à celui des oreilles pour le maintien de la paire de lunettes 110 sur des points d'appui référencés 220-1 et 220-2. L'utilisation d'ouvertures dans le support 105 et non de simples protubérances permet de masquer l'extrémité des branches (comme le font des oreilles). Naturellement, des protubérances ayant une forme particulière, telle que celle d'oreilles, peuvent être utilisées pour servir de point d'appui des branches et masquer leur extrémité.

De même, les figures 2c et 2d représentent, vue de face, la façon dont est positionnée la paire de lunettes 110 sur le support 105 et sur le visage 200, respectivement. A nouveau, comme représenté, la paire de lunettes 110 repose sur les trois points d'appui 205, 210-1 et 210-2 du support 105, ayant un rôle similaire aux points d'appui 215, 220-1 et 220-2 du visage 200, liés au nez et aux oreilles du porteur de la paire de lunettes 110.

De façon similaire encore, les figures 2e et 2f représentent, vue de côté, la façon dont est positionnée la paire de lunettes 110 sur le support 105 et sur le visage 200, respectivement. A nouveau, comme représenté, la paire de lunettes 110 repose sur les trois points d'appui 205, 210-1 et 210-2 du support 105 (le point d'appui 210-2 étant ici masqué par le support 105), ayant un rôle similaire aux points d'appui 215, 220-1 et 220-2 du visage 200 (le point d'appui 220-2 étant ici masqué par le visage 200), liés au nez et aux oreilles du porteur de la paire de lunettes 110.

Selon le mode de réalisation illustré sur la figure 1, deux dispositifs d'acquisition d'images 115-1 et 115-2 sont disposés autour du support 105, l'un permettant d'acquérir des images de face et l'autre d'un côté du support. Un troisième dispositif d'acquisition d'image peut être utilisé, de façon optionnelle, pour acquérir des images de l'autre côté du support. De même, un troisième ou un quatrième dispositif d'acquisition d'image pourrait être utilisé, de façon optionnelle, pour acquérir des images de dessus (bien que ne présentant qu'un intérêt limité pour une paire de lunettes, une telle vue pourrait s'avérer utile pour d'autres objets réels à modéliser). Ces dispositifs sont avantageusement situés à égale distance du support si leurs optiques sont équivalentes ou à des distances tenant compte des optiques utilisées afin que la représentation de l'objet réel à modéliser soit de la même échelle sur chacune des images acquises par ces dispositifs.

Lorsque deux dispositifs fixes d'acquisition d'images sont utilisés, il peut être considéré que l'objet réel à modéliser est symétrique. Dans ce cas, concernant des paires de lunettes, il est considéré que la branche de droite est une vue inversée de la branche de gauche. En outre, il est observé qu'une telle hypothèse permet de limiter le volume de données mémorisées pour représenter l'objet réel.

Comme décrit précédemment, ces dispositifs d'acquisition d'images sont connectés à un ordinateur, par exemple à l'aide d'une connexion de type USB (sigle d'*Universal Serial Bus* en terminologie anglo-saxonne).

Selon un mode de réalisation particulier, cette connexion est bidirectionnelle. Elle permet alors de contrôler chaque dispositif d'acquisition d'images, notamment pour le déclenchement des prises de vue et, le cas échéant, pour permettre d'effectuer des réglages tels que le contrôle du temps de pose et de la sensibilité ISO de la photographie. Elle permet également le transfert des images acquises vers une mémoire de masse, par exemple un disque dur, de l'ordinateur auquel sont connectés les dispositifs d'acquisition d'images.

La figure 3 illustre schématiquement certaines étapes mises en oeuvre conformément à l'invention pour modéliser un objet réel.

Après que l'objet réel à modéliser, ici une paire de lunettes, ait été positionné sur le support prévu à cet effet, dans une position prédéterminée, une commande est émise par l'ordinateur relié aux dispositifs d'acquisition d'images utilisé pour mettre en oeuvre l'invention (étape 300). Cette commande peut comprendre une simple instruction d'acquisition d'une image ou une commande plus complexe visant à configurer le ou les dispositifs d'acquisition d'images selon des paramètres particuliers. Alternativement, la commande vise l'enregistrement d'images reçues par l'ordinateur sous forme de flux.

Cette commande peut être générée de façon manuelle, par un utilisateur, ou de façon automatique par détection de la présence de l'objet réel à modéliser sur le support prévu à cet effet. Une telle détection peut être réalisée par analyse d'image ou à l'aide de contacts.

Les images acquises sont reçues par l'ordinateur dans une étape référencée 305.

Une opération de détourage est ensuite effectuée sur les images reçues afin d'en extraire le contour de la représentation de l'objet réel à modéliser (étape 310). Les textures résultantes, obtenues selon les contours déterminés, peuvent être retouchées pour supprimer d'éventuels artefacts.

L'étape de détourage peut notamment être effectuée à l'aide d'un algorithme de type *chromakey* qui vise à supprimer un ensemble de points ayant une couleur prédéterminée, typiquement verte, selon un seuil donné. Cet algorithme est ici particulièrement adapté à la modélisation de lunettes de vue dont les verres sont transparents. Cet algorithme peut être complété par une analyse d'une image similaire à celle précédemment utilisée, prise à contrejour, pour estimer la transparence de l'objet, c'est-à-dire une caractéristique de la texture, ici des verres. Une telle étape complémentaire est particulièrement adaptée à la modélisation de paires de lunettes de soleil.

Cette étape de détourage, complétée le cas échéant par la ou les étapes décrites précédemment, permet d'obtenir une représentation, en deux dimensions, d'au moins deux parties de la paire de lunettes à modéliser (à l'aide des deux images, l'une prise de face et l'autre de côté). Ces deux parties correspondent à la vue de face et à la vue de côté.

Ces représentations (ou vues) sont ensuite ici combinées (étape 315) pour créer une représentation plane de la paire de lunettes.

Comme décrit précédemment, si seulement deux images sont utilisées (une représentant une vue de face et une autre une vue de côté), la représentation de côté de la paire de lunettes, c'est-à-dire la représentation d'une branche, est dupliquée sous sa forme symétrique selon un plan vertical positionné entre la branche et la partie de la monture comprenant les verres afin de créer une représentation de la branche manquante.

Dans une étape suivante (étape 320), un gabarit, c'est-à-dire un modèle tridimensionnel, typiquement générique et sans texture, est recherché dans une base de données 325 comprenant une pluralité de gabarits ayant des formes et/ou des tailles variées. Le gabarit retenu est le gabarit dont la forme et la taille sont les plus proches de la représentation de la paire de lunettes déterminée au cours des étapes précédentes. En d'autres termes, le gabarit retenu est celui minimisant la surface non couverte par la représentation de la paire de lunettes lorsque cette dernière est appliquée sur le gabarit. Alternativement, un gabarit générique unique peut être utilisé.

Le modèle tridimensionnel de la paire de lunettes est ensuite créé en utilisant ici une technique connue sous le nom de technique des imposteurs consistant à appliquer une texture sur un modèle tridimensionnel prédéterminé.

Le modèle tridimensionnel obtenu est ensuite mémorisé (étape 330) dans une base de données 335. Ce modèle tridimensionnel obtenu est un modèle simplifié de la paire de lunettes placée sur le support 105, reposant sur une géométrie simplifiée comprenant typiquement 3 à 6 surfaces.

Ainsi, en d'autres termes, le modèle tridimensionnel simplifié repose sur un modèle générique de lunettes (gabarit de forme) choisi, le cas échéant, parmi plusieurs, et sur une texture détourée présentant, selon un mode de réalisation particulier, un canal alpha pour les valeurs de transparence intermédiaire.

Il est observé ici que si, pour l'étape de détourage, l'éclairage et les paramètres de prise de vue tels que le temps de pose, la balance des blancs et la sensibilité ne sont pas modifiés de la modélisation d'une paire de lunettes à une autre, les paramètres du détourage, par exemple les paramètres de l'algorithme de type *chromakey* utilisé, restent les même. Le système est alors étalonné en couleur.

En outre, si le système est correctement calibré, notamment si les distances entre les dispositifs d'acquisition d'images et la paire de lunettes sont les mêmes (ou compensées par les optiques utilisées), si ce sont toujours les trois mêmes points d'appui du support qui sont utilisés et si un même gabarit est utilisé, la création d'un modèle tridimensionnel peut être entièrement automatisée pour tout un ensemble de paires de lunettes. En effet, en enregistrant les paramètres liés à la modélisation d'une première paire de lunettes, notamment des paramètres de positionnement et d'échelle, il est possible de les utiliser pour des modélisations ultérieures de paires de lunettes. Le système est alors étalonné en positionnement.

Il est observé ici que si plusieurs gabarits peuvent-être utilisés s'ils présentent des profils similaires (par exemple en ce qui concerne la position des charnières de paires de lunettes, les gabarits présentant souvent, en pratique, des largeurs différentes pouvant engendrer un décalage de positionnement et/ou d'échelle.

La figure 4 illustre un exemple de dispositif de traitement de données pouvant être utilisé pour mettre en oeuvre, au moins partiellement, l'invention, notamment les étapes décrites en référence à la figure 3. Le dispositif 400 est par exemple un ordinateur de type PC.

Le dispositif 400 comporte de préférence un bus de communication 402 auquel sont reliés :
- une unité centrale de traitement ou microprocesseur 404 (CPU, *Central Processing Unit) ;*
- une mémoire morte 406 (ROM, *Read Only Memory*) pouvant comporter le système d'exploitation et des programmes tels que "Prog" ; et
- une mémoire vive ou mémoire cache 408 (RAM, *Random Access Memory*) comportant des registres adaptés à enregistrer des variables et paramètres créés et modifiés au cours de l'exécution des programmes précités.

Optionnellement, le dispositif 400 peut également disposer des éléments suivants :
- une interface de communication 426 reliée à un réseau de communication 428, par exemple le réseau Internet, l'interface étant apte à transmettre et à recevoir des données ;
- une carte graphique 414 reliée à un écran 416 ;
- un disque dur 420 pouvant comporter les programmes "Prog" précités et des données traitées ou à traiter selon l'invention ;
- un clavier 422 et une souris 424 ou tout autre dispositif de pointage comme un crayon optique, un écran tactile ou une télécommande permettant à l'utilisateur d'interagir avec les programmes selon l'invention ; et
- un lecteur de cartes mémoires (non représenté) adapté à y lire ou à y écrire des données traitées ou à traiter selon l'invention.

Le bus de communication permet la communication et l'interopérabilité entre les différents éléments inclus dans le dispositif 400 ou reliés à lui. La représentation du bus n'est pas limitative et, notamment, l'unité centrale est susceptible de communiquer des instructions à tout élément du dispositif 400 directement ou par l'intermédiaire d'un autre élément du dispositif 400.

Le code exécutable de chaque programme permettant à l'appareil programmable de mettre en oeuvre les processus selon l'invention, peut être stocké, par exemple, dans le disque dur 420 ou en mémoire morte 406.

Selon une variante, le code exécutable des programmes pourra être reçu par l'intermédiaire du réseau de communication 428, via l'interface 426, pour être stocké de façon identique à celle décrite précédemment.

De manière plus générale, le ou les programmes pourront être chargés dans un des moyens de stockage du dispositif 400 avant d'être exécutés.

L'unité centrale 404 va commander et diriger l'exécution des instructions ou portions de code logiciel du ou des programmes selon l'invention, instructions qui sont stockées dans le disque dur 420 ou dans la mémoire morte 406 ou bien dans les autres éléments de stockage précités. Lors de la mise sous tension, le ou les programmes qui sont stockés dans une mémoire non volatile, par exemple le disque dur 420 ou la mémoire morte 406, sont transférés dans la mémoire vive 408 qui contient alors le code exécutable du ou des programmes selon l'invention, ainsi que des registres pour mémoriser les variables et paramètres nécessaires à la mise en oeuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

Naturellement, pour satisfaire des besoins spécifiques, une personne compétente dans le domaine de l'invention pourra appliquer des modifications dans la description précédente. En particulier, si l'invention a été particulièrement décrite dans le contexte de la modélisation de paires de lunettes, elle peut être mise en oeuvre pour tout autre objet réel ayant des caractéristiques communes et prédéterminées.

## Revendications

1. Système de modélisation d'une pluralité d'objets réels (110) ayant des caractéristiques similaires et prédéterminées, ce système étant **caractérisé en ce qu'il** comprend les dispositifs suivants,
- un support (105) adapté à recevoir au moins un objet réel de ladite pluralité d'objets réels ayant des caractéristiques similaires et prédéterminées, ledit support étant configuré pour présenter l'objet dans une pose similaire à celle d'utilisation dudit au moins un objet réel ;
- au moins un dispositif d'acquisition d'images (115-1, 115-2) configuré pour obtenir au moins deux images distinctes dudit au moins un objet réel selon au moins deux points de vue distincts ;
- un dispositif de traitement de données (120) configuré pour mettre en oeuvre les étapes suivantes,
○ réception (305) desdites au moins deux images distinctes dudit au moins un objet réel ;
○ détourage (310) d'une représentation dudit au moins un objet réel dans chacune desdites au moins deux images pour obtenir au moins deux textures dudit au moins un objet réel ;
○ obtention (320) d'un modèle tridimensionnel générique dudit au moins un objet réel ; et
○ création d'un modèle tridimensionnel dudit au moins un objet réel à partir desdites au moins deux textures et dudit modèle tridimensionnel générique obtenu.

2. Système selon la revendication 1 selon lequel le dispositif d'acquisition d'images comprend au moins un premier et un second capteurs d'images, lesdits au moins un premier et un second capteurs d'images étant utilisés pour obtenir chacune desdites au moins deux images, respectivement.

3. Système selon la revendication 2 selon lequel lesdits au moins un premier et un second capteurs d'images sont situés à des positions fixes et prédéterminées par rapport audit support.

4. Système selon l'une quelconque des revendications précédentes selon lequel ledit support a une couleur uniforme adaptée à un traitement d'images de type *chromakey.*

5. Système selon l'une quelconque des revendications précédentes selon lequel ledit support comprend au moins une protubérance formant un point d'appui pour ledit au moins un objet réel.

6. Système selon l'une quelconque des revendications précédentes selon lequel ledit support comprend au moins deux ouvertures formant deux points d'appui pour ledit au moins un objet réel.

7. Système selon l'une quelconque des revendications précédentes selon lequel ledit dispositif de traitement de données est en outre configuré pour identifier un modèle tridimensionnel générique parmi une pluralité de modèles tridimensionnels génériques, ledit modèle tridimensionnel générique obtenu étant ledit modèle tridimensionnel générique identifié.

8. Système selon l'une quelconque des revendications précédentes selon lequel ledit dispositif de traitement de données est en outre configuré pour retoucher au moins une desdites au moins deux textures dudit au moins un objet réel.

9. Système selon l'une quelconque des revendications précédentes selon lequel ledit dispositif de traitement de données est en outre configuré pour transmettre une commande audit au moins un dispositif d'acquisition d'images, lesdites au moins deux images distinctes dudit au moins un objet réel étant obtenues en réponse à ladite commande.

10. Système selon la revendication 9 selon lequel ladite commande comprend un paramètre de configuration dudit au moins un dispositif d'acquisition d'images.
